# EUROPEAN PATENT APPLICATION

(11) **EP 4 357 311 A1**
(43) Date of publication of application: **24.04.2024**
(21) Application number: 22825065.0
(22) Date of filing: 16.06.2022
(51) Int. Cl.: C03C 27/12, C08F 16/38, C09J 11/06, C09J 129/14, C09J 7/38, G02F 1/1333

(54) **ADHESIVE FILM, LAMINATE, LIQUID CRYSTAL DISPLAY, AND LAMINATED GLASS**

(30) Priority: 18.06.2021 JP 2021102044
(71) Applicant: SEKISUI CHEMICAL CO., LTD., Osaka-shi Osaka 530-8565 (JP)
(72) Inventor: OOHIGASHI, Yuji, Koka-shi, Shiga 528-8585 (JP); ISHIKAWA, Yuki, Mishima-gun, Osaka 618-0021 (JP); TERAGUCHI, Yumiko, Mishima-gun, Osaka 618-0021 (JP); KAMOSHIDA, Naoki, Mishima-gun, Osaka 618-0021 (JP)
(74) Representative: Ter Meer Steinmeister & Partner
(86) International application number: PCT/JP2022/024194
(87) International publication number: WO 2022/265077

(57) **Abstract**

The pressure-sensitive adhesive film of the present invention comprises a thermoplastic resin, wherein a shear storage elastic modulus at 85°C is 0.06 × 10⁶ Pa or more and 1.00 × 10⁶ Pa or less, the pressure-sensitive adhesive film comprises no plasticizer or comprises less than 20 parts by mass of a plasticizer based on 100 parts by mass of the thermoplastic resin, and a gel fraction is 15% or less. The laminate of the present invention comprises the pressure-sensitive adhesive film of the present invention, a first organic material substrate, and at least one base material of a second organic material substrate and an inorganic material substrate. The liquid crystal display of the present invention and the laminated glass of the present invention each comprise the laminate of the present invention. The present invention can provide a pressure-sensitive adhesive film excellent in level-difference conformability, bleed performance and recyclability, a laminate comprising the pressure-sensitive adhesive film, and a liquid crystal display and a laminated glass each comprising the laminate.

## Description

### Technical Field

The present invention relates to a pressure-sensitive adhesive film, a laminate comprising the pressure-sensitive adhesive film, and a liquid crystal display and a laminated glass each comprising the laminate.

### Background Art

Pressure-sensitive adhesive films have been widely used in order to stack and fix surface protection panels, polarization plates, touch sensor-attached films, touch sensor-attached glass, and the like in various displays such as liquid crystal displays, organic EL displays, and touch panel-attached displays. (Meth)acrylic resins have been conventionally widely used in pressure-sensitive adhesive films from the viewpoint of transparency, pressure-sensitive adhesiveness, and/or the like. Use of polyvinyl acetal-based resins has also been studied besides use of (meth)acrylic resins.

With respect to use of polyvinyl acetal-based resins, there is known use of a plasticized polyvinyl acetal-based resin to which a certain amount or more of a plasticizer is compounded, as disclosed in PTLS 1 and 2. There is also studied compounding of a reactive diluent to be cured by light irradiation, in order to enable a plasticized polyvinyl acetal-based resin to be higher in storage elastic modulus by light irradiation.

Furthermore, there has been recently tried to introduce a light control film to laminated glass constituting window glass, in order to enable light permeability or the like to be adjusted. With respect to introduction of a light control film, there is known, for example, a configuration of laminated glass where a light control film is placed between two glass plates and the light control film and each of the glass plates are bonded with a resin film being interposed therebetween. There has been studied an application of a pressure-sensitive adhesive film comprising a plasticized polyvinyl acetal-based resin, to a resin film.

### Citation List

### Patent Literature

PTL 1: JP 6046811 B
PTL 2: JP 6116772 B

### Summary of Invention

### Technical Problem

Meanwhile, in a display, or a laminated glass to which a light control film is introduced, various members may be attached to a surface protection panel, a laminated glass member, a light control film, and/or the like, and there may be a level-difference on an adhesive surface with a pressure-sensitive adhesive film. For example, there is a so-called black ceramic level-difference on glass constituting a surface protection panel, in an in-car display. Accordingly, level-difference conformability of a pressure-sensitive adhesive film, is important for a process for sticking such a pressure-sensitive adhesive film. A pressure-sensitive adhesive film, when stored, may cause bleeding of a plasticizer from such a pressure-sensitive adhesive film, leading to working environment contamination. Furthermore, a pressure-sensitive adhesive film is desirably recyclable in consideration of a reduction in environmental load.

An object of the present invention is to provide a pressure-sensitive adhesive film excellent in level-difference conformability, bleed performance and recyclability, a laminate comprising the pressure-sensitive adhesive film, and a liquid crystal display and a laminated glass each comprising the laminate.

### Solution to Problem

The present inventors have made intensive studies, and as a result, have found that the above problems can be solved by a pressure-sensitive adhesive film comprising a thermoplastic resin, in which not only the content of a plasticizer is low, but also the storage elastic modulus is within a predetermined range and the gel fraction is equal to or less than a predetermined value, and thus have completed the following present invention.

In other words, the present invention provides the following [1] to [32].
[1] A pressure-sensitive adhesive film comprising a thermoplastic resin, wherein
   a shear storage elastic modulus at 85°C is 0.06 × 10⁶ Pa or more and 1.00 × 10⁶ Pa or less,
   the pressure-sensitive adhesive film comprises no plasticizer, or comprises less than 20 parts by mass of a plasticizer based on 100 parts by mass of the thermoplastic resin, and
   a gel fraction is 15% or less.
[2] The pressure-sensitive adhesive film according to [1], wherein a weight-average molecular weight (Mw) of the thermoplastic resin is 600,000 or less.
[3] The pressure-sensitive adhesive film according to [1] or [2], wherein a thickness is 100 µm or more and 2000 µm or less.
[4] The pressure-sensitive adhesive film according to any of [1] to [3], wherein a maximum peak temperature of tanδ is 10°C or more and 52°C or less.
[5] The pressure-sensitive adhesive film according to any of [1] to [4], wherein the thermoplastic resin is a polyvinyl acetal-based resin.
[6] The pressure-sensitive adhesive film according to [5], wherein the polyvinyl acetal-based resin has a polyalkylene oxide structure represented by the following formula (1): 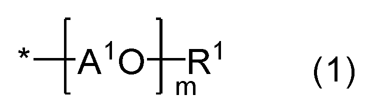 wherein A¹O represents an oxyalkylene group having 2 to 6 carbon atoms, and m represents an average number of repeating and is 4 to 200; R¹ represents an alkyl group having 1 to 8 carbon atoms, or a hydrogen atom, in which the oxyalkylene group is optionally adopted singly or as a mixture of two or more kinds thereof; and * represents a position of binding with other group.
[7] The pressure-sensitive adhesive film according to [5], wherein the polyvinyl acetal-based resin has a polyalkylene oxide structure.
[8] The pressure-sensitive adhesive film according to [6] or [7], wherein an oxyalkylene group in the polyalkylene oxide structure includes at least any of an oxyethylene group or an oxypropylene group.
[9] The pressure-sensitive adhesive film according to any of [6] to [8], wherein an oxyalkylene group in the polyalkylene oxide structure contains both an oxyethylene group and an oxypropylene group.
[10] The pressure-sensitive adhesive film according to any of [6] to [9], wherein a degree of acetalization is 60% by mol or more.
[11] The pressure-sensitive adhesive film according to any of [6] to [10], wherein the polyalkylene oxide structure is linked to a main chain via a single bond, or any of an ether bond, an ester bond, an amide bond, and a hydrocarbon group optionally having at least any of these bonds.
[12] The pressure-sensitive adhesive film according to any of [6] to [11], wherein an amount of modification by the polyalkylene oxide structure is 0.1% by mol or more and 10% by mol or less.
[13] The pressure-sensitive adhesive film according to any of [5] to [12], wherein a degree of acetalization of the polyvinyl acetal-based resin is 60% by mol or more and 90% by mol or less.
[14] The pressure-sensitive adhesive film according to any of [5] to [13], wherein an amount of a hydroxyl group in the polyvinyl acetal-based resin is 5% by mol or more and 35% by mol or less.
[15] The pressure-sensitive adhesive film according to any of [5] to [14], wherein a degree of acetylation of the polyvinyl acetal-based resin is 0.01% by mol or more and 50% by mol or less.
[16] The pressure-sensitive adhesive film according to any of [5] to [15], wherein the polyvinyl acetal-based resin is a polyvinyl butyral-based resin.
[17] The pressure-sensitive adhesive film according to any of [5] to [16], wherein a weight-average molecular weight (Mw) of the polyvinyl acetal-based resin is 50,000 or more and 600,000 or less.
[18] The pressure-sensitive adhesive film according to any of [5] to [17], wherein a content of the polyvinyl acetal-based resin is 50% by mass or more and 100% by mass or less based on a total amount of the thermoplastic resin comprised in the pressure-sensitive adhesive film.
[19] The pressure-sensitive adhesive film according to any of [1] to [18], not containing a low-molecular weight compound having a molecular weight of less than 1000 or containing less than 20 parts by mass of the compound based on 100 parts by mass of the thermoplastic resin.
[20] The pressure-sensitive adhesive film according to any of [1] to [19], wherein the plasticizer is at least one selected from the group consisting of an organic ester plasticizer, an organic phosphorus-based plasticizer, an organic ether-based plasticizer, and an alcohol-based plasticizer.
[21] The pressure-sensitive adhesive film according to any of [1] to [20], wherein the pressure-sensitive adhesive film comprises at least one selected from the group consisting of an ester of glycol and a monobasic organic acid, an ester compound of a dibasic organic acid having 4 to 12 carbon atoms and an alcohol having 4 to 10 carbon atoms, a polyalkylene glycol-based plasticizer, and a polyoxyalkylene ether-based plasticizer, in the plasticizer.
[22] The pressure-sensitive adhesive film according to any of [1] to [21], to be used for bonding paired base materials.
[23] The pressure-sensitive adhesive film according to [22], to be used for bonding a first organic material substrate, and a second organic material substrate or inorganic material substrate, wherein the first organic material substrate and the second organic material substrate are at least one organic material substrate selected from the group consisting of a polarization film, a polyethylene terephthalate film, a polycarbonate plate, and a (meth)acrylic plate.
[24] A laminate comprising the pressure-sensitive adhesive film according to any of [1] to [23], and paired base materials, wherein the pressure-sensitive adhesive film is placed between the paired base materials.
[25] The laminate according to [24], wherein the base material constitutes at least one portion of a touch panel, a light control element, and a display element.
[26] The laminate according to [25] or [26], comprising an interlayer member placed between the paired base materials, and an adhesive film placed between each of the base materials and the interlayer member, wherein at least any of such adhesive films is the pressure-sensitive adhesive film.
[27] The laminate according to [26], wherein at least any of an inorganic material substrate and an organic material substrate is placed on a location at which the pressure-sensitive adhesive film on the interlayer member adheres.
[28] The laminate according to [26] or [27], wherein the interlayer member is any of a touch panel and a light control element.
[29] A liquid crystal display comprising the laminate according to any of [24] to [28].
[30] A laminated glass comprising the laminate according to any of [24] to [28].
[31] Use of the pressure-sensitive adhesive film according to any of [1] to [23], in a display.
[32] Use of the pressure-sensitive adhesive film according to any of [1] to [23], in laminated glass.

### Advantageous Effects of Invention

The present invention can provide a pressure-sensitive adhesive film excellent in level-difference conformability, bleed performance and recyclability, a laminate comprising the pressure-sensitive adhesive film, and a liquid crystal display and a laminated glass each comprising the laminate.

### Brief Description of Drawings

[Fig. 1] Fig. 1 is a cross-sectional view illustrating a laminate according to a first embodiment.
[Fig. 2] Fig. 2 is a cross-sectional view illustrating a laminate according to a second embodiment.
[Fig. 3] Fig. 3 is a cross-sectional view illustrating a laminate according to a third embodiment.
[Fig. 4] Fig. 4 is a cross-sectional view illustrating a laminate according to a fourth embodiment.

### Description of Embodiments

### <Pressure-sensitive adhesive film>

The pressure-sensitive adhesive film of the present invention comprises a thermoplastic resin, wherein the shear storage elastic modulus at 85°C is 0.06 × 10⁶ Pa or more and 1.00 × 10⁶ Pa or less, the pressure-sensitive adhesive film comprises no plasticizer or comprises less than 20 parts by mass of a plasticizer based on 100 parts by mass of the thermoplastic resin, and the gel fraction is 15% or less.

The pressure-sensitive adhesive film of the present invention has the foregoing configuration, and thus can be improved in level-difference conformability, bleed performance and recyclability.

Hereinafter, a pressure-sensitive adhesive film according to one embodiment of the present invention is described in detail.

### [Shear storage elastic modulus]

The shear storage elastic modulus at 85°C of the pressure-sensitive adhesive film of the present invention is 0.06 × 10⁶ Pa or more and 1.00 × 10⁶ Pa or less. When the shear storage elastic modulus is less than 0.06 × 10⁶ Pa, foaming may occur in attachment to cause deterioration in attachability. When the shear storage elastic modulus is more than 1.00 × 10⁶ Pa, the pressure-sensitive adhesive film is deteriorated in level-difference conformability, and bubbles may remain in a level-difference portion to cause deterioration in viewability and/or attachability.

The shear storage elastic modulus at 85°C is preferably 0.08 × 10⁶ Pa or more, more preferably 0.09 × 10⁶ Pa or more from the viewpoint of attachability of the pressure-sensitive adhesive film.

The shear storage elastic modulus at 85°C of the pressure-sensitive adhesive film is preferably 0.70 × 10⁶ Pa or less, more preferably 0.50 × 10⁶ Pa or less, further preferably 0.30 × 10⁶ Pa or less.

The shear storage elastic modulus can be measured by performing viscoelasticity measurement in a shear mode at a frequency of 1 Hz with a dynamic viscoelasticity measurement apparatus, and detecting the storage elastic modulus (G') at 85°C.

### [Gel fraction]

The gel fraction of the pressure-sensitive adhesive film of the present invention is 15% or less. When the gel fraction is more than 15%, the pressure-sensitive adhesive film is deteriorated in recyclability. In other words, when the gel fraction is more than 15%, a used pressure-sensitive adhesive film, when recycled and then used again as a pressure-sensitive adhesive film, has many optical defects due to formation of gel into optical defects in such a pressure-sensitive adhesive film, and thus such a pressure-sensitive adhesive film recycled cannot be sometimes used in applications of a display, laminated glass, and/or the like. The gel fraction is preferably 10% or less, more preferably 5% or less, further preferably 3% or less, still further preferably 1% or less, particularly preferably 0% from the viewpoint of recyclability.

The gel fraction can be measured as follows. About 0.1 g of the pressure-sensitive adhesive film is dissolved in 40 g of THF (tetrahydrofuran), an undissolved component is taken out, and thereafter the undissolved component is dried. The gel fraction is calculated from the following expression. Gel fraction (%) = (Weight of undissolved product after drying)/(Weight of pressure-sensitive adhesive film before dissolution) × 100

### [Maximum peak temperature of tanδ]

The maximum peak temperature of tanδ of the pressure-sensitive adhesive film in the present invention is preferably 10°C or more and 52°C or less. When the maximum peak temperature of tanδ is 52°C or less, a resin film is sufficiently flexible and level-difference conformability can be improved. In addition, adhesiveness to various resin materials and inorganic glass is easily improved. The maximum peak temperature of tanδ of the resin composition is more preferably 48°C or less, further preferably 44°C or less, still further preferably 42°C or less from the viewpoint of level-difference conformability.

When the maximum peak temperature of tanδ is 10°C or more, handleability can be prevented from being deteriorated due to an excessive increase in pressure-sensitive adhesiveness. The maximum peak temperature of tanδ of the resin composition is preferably 12°C or more, more preferably 20°C or more.

The maximum peak temperature of tanδ of the resin film can be detected by reading the peak temperature at which the loss tangent tanδ obtained from the viscoelasticity measurement result in viscoelasticity measurement performed with a dynamic viscoelasticity measurement apparatus is a maximum value.

The shear storage elastic modulus, the gel fraction, and the maximum peak temperature of tanδ can be adjusted by appropriately selecting the type of a resin, the molecular weight of a resin, the presence of compounding of a plasticizer, the content of a plasticizer, and the like

### [Thermoplastic resin]

The pressure-sensitive adhesive film comprises a thermoplastic resin, as described above. The thermoplastic resin favorably has no crosslinked structure, or even if having a crosslinked structure, favorably has a small amount of a crosslinked structure, from the viewpoint of a reduction in gel fraction. Examples of the thermoplastic resin for use in the pressure-sensitive adhesive film include a (meth)acrylic resin, a polyvinyl acetal-based resin, a polyvinyl alcohol-based resin (PVA), a polyurethane-based resin (PU), an ethylene-vinyl acetate copolymer resin (EVA), an ethylene-vinyl acetate copolymer saponified product (EVOH), an ethylene-methacrylic acid copolymer resin, an ionomer resin, an isobutylene resin, a styrene-isoprene copolymer resin, and a styrene-butadiene copolymer resin.

The thermoplastic resin in the pressure-sensitive adhesive film may be used singly or in combinations of two or more kinds.

The thermoplastic resin is, in particular, preferably a polyvinyl acetal-based resin.

The polyvinyl acetal-based resin is used, thereby easily allowing level-difference conformability to be improved. Not only the gel fraction is reduced, but also adhesiveness is easily improved. Hereinafter, the polyvinyl acetal-based resin for use in the thermoplastic resin is described in detail.

The weight-average molecular weight (Mw) of the thermoplastic resin is preferably 600,000 or less. The weight-average molecular weight is adjusted within the above range, and thus flexibility of the pressure-sensitive adhesive film is improved, and level-difference conformability of the pressure-sensitive adhesive film can be further improved. The weight-average molecular weight (Mw) of the thermoplastic resin is more preferably 500,000 or less, further preferably 400,000 or less from these viewpoints. The weight-average molecular weight (Mw) of the thermoplastic resin is preferably 50,000 or more, more preferably 100,000 or more, further preferably 120,000 or more, still further preferably 150,000 or more from the viewpoint of mechanical strength and the like.

The weight-average molecular weight (Mw) is measured by gel permeation chromatography.

### [Polyvinyl acetal-based resin]

The thermoplastic resin is preferably a polyvinyl acetal-based resin, as described above. The polyvinyl acetal-based resin may be a modified polyvinyl acetal resin or may be an unmodified polyvinyl acetal resin. The modified polyvinyl acetal resin may have a structure (modified group) other than an acetal group, a hydroxyl group, and an acetyl group, as described below, and preferably has a modified group in a side chain.

The polyvinyl acetal-based resin is obtained by acetalizing a polyvinyl alcohol with an aldehyde, and furthermore, if necessary, reacting the resultant with a modifying agent or subjecting the resultant to a re-acetylation treatment. The modified polyvinyl acetal resin may also be obtained by using a modified polyvinyl alcohol as a polyvinyl alcohol serving as a raw material.

The structure other than an acetal group, a hydroxyl group, and an acetyl group is preferably a polyalkylene oxide structure. The polyalkylene oxide structure is specifically as represented by the following formula (1). 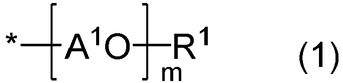 wherein A¹O represents an oxyalkylene group having 2 to 6 carbon atoms, and m represents an average number of repeating and is 4 to 200; R¹ represents an alkyl group having 1 to 8 carbon atoms, or a hydrogen atom, in which the oxyalkylene group is optionally adopted singly or as a mixture of two or more kinds thereof; and * represents a position of binding with other group.

The oxyalkylene group in A¹O is an oxyalkylene group having 2 to 6 carbon atoms, preferably an oxyalkylene group having 2 to 4 carbon atoms, more preferably an oxyalkylene group having 2 to 3 carbon atoms. When the number of carbon atoms in the oxyalkylene group is within the above range, level-difference conformability is easily improved. In addition, for example, adhesiveness to a resin material is also easily improved.

The alkylene group in the oxyalkylene group may be straight or may have a branched structure. Examples of the oxyalkylene group include an oxyethylene group, an oxypropylene group, or an oxybutylene group, and an oxyethylene group or an oxypropylene group is preferable. The oxyalkylene group may be used singly or in combinations of two or more kinds thereof. In a case where two or more kinds of such oxyalkylene groups are used in combination, such each oxyalkylene group may be added in a random or block form, and is preferably added in a random form.

The oxyalkylene group in the polyalkylene oxide structure preferably contains at least any of an oxyethylene group and an oxypropylene group, or also preferably contains both an oxyethylene group and an oxypropylene group. In a case where both an oxyethylene group and an oxypropylene group are contained, these groups may constitute a block structure and more preferably constitute a random structure. In a case where an oxyethylene group (EO) and an oxypropylene group (PO) are contained, the ratio of the oxypropylene group to the oxyethylene group (PO/EO), in terms of molar ratio, is, for example, 1/9 or more and 9/1 or less, preferably 2/8 or more and 8/2 or less, more preferably 3/7 or more and 7/3 or less.

In the formula (1), m represents the average number of repeating of such oxyalkylene groups, is 4 to 200, preferably 5 to 100, more preferably 10 to 80, further preferably 15 to 50.

The alkyl group in R¹ may be straight, or may have a branched structure.

Examples of the alkyl group in R¹ include a methyl group, an ethyl group, a n-propyl group, an isopropyl group, a n-butyl group, branched butyl groups such as a s-butyl and a t-butyl group, a n-pentyl group, branched pentyl groups, a n-hexyl group, branched hexyl groups, a n-heptyl group, branched heptyl groups such as an isoheptyl group and a 3-heptyl group, a n-octyl group, and branched octyl groups such as an isooctyl group and a 2-ethylhexyl group.

R¹ preferably represents an alkyl group having 1 to 6 carbon atoms, or a hydrogen atom, more preferably an alkyl group having 1 to 4 carbon atoms, or a hydrogen atom.

The polyalkylene oxide structure may be linked to a main chain via a single bond, and is preferably linked to a main chain via a linking group other than a single bond.

Examples of the linking group other than a single bond include an ether bond (-O-), an ester bond (-COO-), an amide bond (-CONR-: R represents a hydrogen atom or an alkyl group having 1 to 4 carbon atoms, preferably a hydrogen atom), or a hydrocarbon group optionally having at least any of these bonds. In particular, an ether bond (-O-), an ester bond (-COO-), or a hydrocarbon group optionally having at least any of these bonds is more preferable. The number of carbon atoms in the hydrocarbon group is not particularly limited, may be, for example, about 1 to 10, and is preferably 1 to 4. In particular, the polyalkylene oxide structure is more preferably bound to a main chain via any of an ether bond or -CH₂O-. The polyalkylene oxide structure, when bound to a main chain via any thereof, thus is easily produced. Here, an oxygen atom in -CH₂O- may be bound to the polyalkylene oxide structure.

The polyvinyl acetal-based resin typically has an acetal group, a hydroxyl group, and an acetyl group. It is noted that the polyvinyl acetal-based resin may be modified by a functional group or subjected to re-acetylation reaction to contain no hydroxyl group. Here, such acetal group, hydroxyl group, and acetyl group are each a group bound to a main chain directly or via an oxygen atom, as represented by formula (3-1) to formula (3-3) described below, and do not encompass any hydroxyl group contained in the polyalkylene oxide structure.

The polyvinyl acetal-based resin is preferably modified to have the polyalkylene oxide structure represented by the formula (1), as described above. Hereinafter, the polyvinyl acetal-based resin, which has the polyalkylene oxide structure, may be described as a modified polyvinyl acetal resin (A) so as to be described with being distinguished from other polyvinyl acetal-based resin.

The amount of modification of the modified polyvinyl acetal resin (A) by the polyalkylene oxide structure (namely, the functional group represented by the formula (1)) is preferably 0.1% by mol or more and 10% by mol or less. When the amount of modification is within the above range, the shear storage elastic modulus at 85°C can be increased and level-difference conformability can be further improved. In addition, adhesiveness is also easily improved.

The amount of modification by the polyalkylene oxide structure is preferably 0.2% by mol or more, more preferably 0.3% by mol or more, further preferably 0.4% by mol or more, particularly preferably 0.5% by mol or more, and preferably 8% by mol or less, more preferably 6% by mol or less, further preferably 4% by mol or less from these viewpoints.

The amount of modification by the functional group represents the proportion of the functional group relative to the total vinyl monomer unit constituting the polyvinyl acetal-based resin. The amount of modification can be calculated from a spectrum obtained by subjecting the polyvinyl acetal-based resin to proton NMR measurement. The degree of acetalization, the amount of a hydroxyl group, and the degree of acetylation, described below, can also be each calculated from a spectrum obtained by proton NMR measurement performed.

The polyvinyl acetal-based resin does not optionally have the polyalkylene oxide structure. Such a polyvinyl acetal-based resin may be a modified polyvinyl acetal resin having a modified group other than the functional group represented by the formula (1), or may be an unmodified polyvinyl acetal resin. Even such an unmodified polyvinyl acetal resin allows level-difference conformability to be easily improved, by decreasing the amount of a hydroxyl group, as described below, due to re-acetylation reaction or the like and thus decreasing the maximum peak temperature of tanδ.

Examples of the modified group other than the functional group represented by the formula (1) include an alkyl group. The alkyl group may be straight or may have a branched structure. The number of carbon atoms in the alkyl group is, for example, 2 to 30, preferably 3 to 24, more preferably 5 to 20, further preferably 7 to 18, still further preferably 11 to 18. The alkyl group may be directly bound to a main chain, preferably a constituent unit derived from a vinyl group constituting a main chain, and is preferably bound via an ether bond (-O-), a ester bond (*-COO-**), or a urethane bond (*-NHCOO-**), more preferably bound via an ester bond or a urethane bond.

Herein, "*" and "**" in the ester bond and the urethane bond each represent a position of binding to the alkyl group or the main chain, and, preferably, "*" represents a position of binding to the alkyl group and "**" represents a position of binding to the main chain in the respective bonds. R in the urethane bond is preferably a hydrogen atom.

The polyvinyl acetal-based resin may have a constituent unit derived from a vinyl group, as the main chain, and the functional group represented by the formula (1) may be bound to a constituent unit derived from a vinyl group constituting the main chain. Accordingly, the polyvinyl acetal-based resin preferably has a constituent unit represented by the following formula (2), and in particular, more preferably has any constituent unit represented by the following formula (2-1) and formula (2-2). 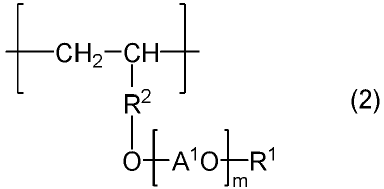 wherein A¹O, R¹, and m are the same as described above; and R² represents any of a single bond, or a hydrocarbon group optionally having at least any of an ester bond or an ether bond. 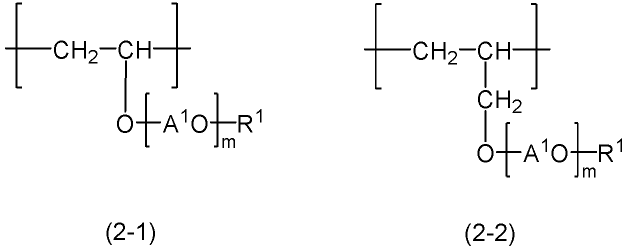 wherein A¹O, R¹, and m are the same as described above.

A¹O, R¹, and m in the formulae (2), (2-1), and (2-2) are as described above, and thus the description thereof is omitted. The number of carbon atoms in R² in the formula (2) is, for example, 1 to 10, preferably 1 to 4. The hydrocarbon group in R² optionally has an ester bond or an ether bond as described above, and preferably has neither an ester bond nor an ether bond.

The polyvinyl acetal-based resin typically has an acetal group, a hydroxyl group, and an acetyl group, namely, the polyvinyl acetal-based resin typically has constituent units represented by the following formula (3-1), formula (3-2) and formula (3-3). Accordingly, the modified polyvinyl acetal resin preferably has constituent units represented by the following formula (3-1), formula (3-2) and formula (3-3), and the constituent unit represented by the formula (2).

It is noted that the polyvinyl acetal-based resin, when is, for example, an unmodified polyvinyl acetal resin, has optionally no hydroxyl group as described above and has optionally no constituent unit represented by the formula (3-2). In other words, the unmodified polyvinyl acetal resin has constituent units represented by the following formula (3-1) and formula (3-3), and may optionally further have a constituent unit represented by the following formula (3-2). 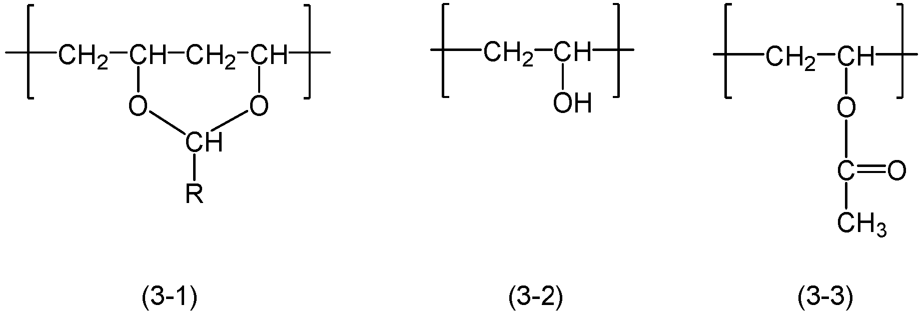 wherein R in the formula (3-1) represents a hydrogen atom or a hydrocarbon group having 1 to 19 carbon atoms.

The polyvinyl acetal-based resin is obtained by acetalizing a polyvinyl alcohol or a modified polyvinyl alcohol obtained by modification of a polyvinyl alcohol, with an aldehyde, and then, if necessary, modifying the resultant, as described above, and the polyvinyl alcohol here used is generally a polyvinyl alcohol having a degree of saponification of 80 to 99.8% by mol.

The number of carbon atoms in an acetal group contained in the polyvinyl acetal-based resin is not particularly limited, and is, for example, 1 to 20, preferably 2 to 10, more preferably 2 to 6, further preferably 2, 3 or 4, as represented by the formula (3-1). Accordingly, the number of carbon atoms in R represented by the formula (3-1) is preferably 1 to 9, more preferably 1 to 5, further preferably 1 to 3.

The acetal group is specifically particularly preferably a butyral group, and therefore the polyvinyl acetal-based resin is preferably a polyvinyl butyral-based resin. The degree of acetalization (namely, amount of acetal) of the polyvinyl acetal-based resin is, for example, 40% by mol or more and preferably 60% by mol or more. The degree of acetalization is more preferably 65% by mol or more, further preferably 70% by mol or more, and preferably 90% by mol or less, more preferably 88% by mol or less, further preferably 85% by mol or less. The degree of acetalization is within such a range, and thus not only the amount of a hydroxyl group is a proper amount, but also the functional group represented by the formula (1) is easily contained in a certain amount. When the degree of acetalization is 60% or more, the shear storage elastic modulus at 85°C is easily within the above range and level-difference conformability is easily improved.

The degree of acetalization means the degree of acetoacetalization in a case where an acetal group of the polyvinyl acetal-based resin is an acetoacetal group and means the degree of butyralization in a case where the acetal group is a butyral group.

The degree of acetalization represents the proportion of a vinyl alcohol unit acetalized relative to the total vinyl monomer unit constituting the polyvinyl acetal-based resin.

The amount of a hydroxyl group in the polyvinyl acetal-based resin is preferably 35% by mol or less, more preferably 33% by mol or less, further preferably 30% by mol or less. When the amount of a hydroxyl group is equal to or less than the upper limit value, the maximum peak temperature of tanδ is easily a suitable value and level-difference conformability is further improved.

The amount of a hydroxyl group in the polyvinyl acetal-based resin may be 0% by mol or more, and in the case of the modified polyvinyl acetal resin (A), the amount of a hydroxyl group may be a certain amount and is, for example, 5% by mol or more, preferably 9% by mol or more, more preferably 10% by mol or more, further preferably 12% by mol or more, from the viewpoint of preventing the pressure-sensitive adhesive film from being too flexible.

In a case where the polyvinyl acetal-based resin is, for example, an unmodified polyvinyl acetal resin, the amount of a hydroxyl group is needed to be low in order to decrease the maximum peak temperature of tanδ and further improve level-difference conformability. Therefore, the amount of a hydroxyl group in the unmodified polyvinyl acetal resin is preferably 15% by mol or less, more preferably 10% by mol or less, further preferably 5% by mol or less, still further preferably 3% by mol or less, most preferably 0% by mol.

The amount of a hydroxyl group represents the proportion of a hydroxyl group relative to the total vinyl monomer unit constituting the polyvinyl acetal-based resin.

The degree of acetylation (amount of acetyl group) of the polyvinyl acetal-based resin is, for example, 0.01% by mol or more and 50% by mol or less, and in the case of the modified polyvinyl acetal resin (A), the degree of acetylation is also favorably equal to or less than a certain value so that the amount of modification by the functional group represented by the formula (1) is equal to or more than a certain value. Accordingly, the degree of acetylation of the modified polyvinyl acetal resin (A) is preferably 20% by mol or less, more preferably 15% by mol or less, further preferably 12% by mol or less, still further preferably 5% by mol or less.

The degree of acetylation of the modified polyvinyl acetal resin (A) is, for example, 0.01% by mol or more as described above, and is preferably 0.1% by mol or more, more preferably 0.3% by mol or more.

In the case of the unmodified polyvinyl acetal resin, the degree of acetylation is favorably equal to or more than a certain value, and is preferably 15% by mol or more, more preferably 25% by mol or more, further preferably 30% by mol or more, from the viewpoint of a decrease in amount of a hydroxyl group and a decrease in maximum peak temperature of tanδ and thus an improvement in level-difference conformability. The degree of acetylation of the unmodified polyvinyl acetal resin is, for example, 50% by mol or less as described above, and is preferably 45% by mol or less, further preferably 42% by mol or less.

The degree of acetylation represents the proportion of an acetyl group relative to the total vinyl monomer unit constituting the polyvinyl acetal-based resin.

The aldehyde for use in the production of the polyvinyl acetal-based resin is not particularly limited, and is, for example, an aldehyde having 1 to 20 carbon atoms, and in general, an aldehyde having 2 to 10 carbon atoms is suitably used. The aldehyde having 2 to 10 carbon atoms is not particularly limited, and examples thereof include acetaldehyde, propionaldehyde, n-butylaldehyde, isobutylaldehyde, n-valeraldehyde, 2-ethylbutylaldehyde, n-hexylaldehyde, n-octylaldehyde, n-nonylaldehyde, n-decylaldehyde, and benzaldehyde. In particular, an aldehyde having 2 to 6 carbon atoms, such as acetaldehyde, n-butylaldehyde, n-hexylaldehyde, or n-valeraldehyde is preferable, an aldehyde having 2, 3, or 4 carbon atoms is more preferable, and n-butylaldehyde is further preferable. Such an aldehyde may be used singly or in combinations of two or more kinds thereof.

The polyvinyl acetal-based resin for use in the present invention may be used singly or in combinations of two or more kinds thereof.

In a case where the polyvinyl acetal-based resin is used as the thermoplastic resin in the pressure-sensitive adhesive film of the present invention, the pressure-sensitive adhesive film may comprise a thermoplastic resin other than the polyvinyl acetal-based resin as long as the effects of the present invention are exerted. Here, the polyvinyl acetal-based resin is preferably a main component. The thermoplastic resin other than the polyvinyl acetal-based resin is as described above.

Specifically, the content of the polyvinyl acetal-based resin is, for example, 50% by mass or more, preferably 70% by mass or more, more preferably 90% by mass or more, most preferably 100% by mass based on the total amount of the thermoplastic resin comprised in the pressure-sensitive adhesive film. Accordingly, the thermoplastic resin comprised in the pressure-sensitive adhesive film of the present invention may be one being composed of only the polyvinyl acetal-based resin.

### (Plasticizer)

The pressure-sensitive adhesive film of the present invention may comprise a plasticizer. The pressure-sensitive adhesive film can comprise a plasticizer and thus can be flexible, thereby allowing the pressure-sensitive adhesive film to be decreased in maximum peak temperature of tanδ and further improved in level-difference conformability. Herein, the pressure-sensitive adhesive film of the present invention comprises no plasticizer, or even if comprising a plasticizer, comprises a small amount of a plasticizer. The pressure-sensitive adhesive film comprises only a small amount of a plasticizer, or comprises no plasticizer, and thus bleed performance can be improved.

Even when the pressure-sensitive adhesive film of the present invention comprises a small amount of a plasticizer or comprises no plasticizer, the above predetermined thermoplastic resin can be used to allow for a further improvement in level-difference conformability.

The content of the plasticizer in the pressure-sensitive adhesive film is less than 20 parts by mass based on 100 parts by mass of the thermoplastic resin comprised in the pressure-sensitive adhesive film. When the content of the plasticizer is 20 parts by mass or more, the pressure-sensitive adhesive film is sometimes deteriorated in bleed performance.

The content of the plasticizer is preferably 15 parts by mass or less, more preferably 10 parts by mass or less, further preferably 5 parts by mass or less, still further preferably 1 part by mass or less from the viewpoint of bleed performance of the pressure-sensitive adhesive film. The lower limit of the plasticizer is 0 parts by mass.

The resin composition in the present invention optionally comprises no plasticizer or optionally comprises a plasticizer in the case of use of the modified polyvinyl acetal resin (A), and comprising a plasticizer easily improves level-difference conformability. On the other hand, the resin composition favorably comprises a plasticizer from the viewpoint of an enhancement in adhesiveness of a resin film, in the case of use of the unmodified polyvinyl acetal resin.

Examples of the plasticizer include organic ester plasticizers, organic phosphorus-based plasticizers such as an organic phosphoric acid ester plasticizer and an organic phosphorous acid ester plasticizer, organic ether-based plasticizers such as a polyalkylene glycol-based plasticizer and a polyoxyalkylene ether-based plasticizer, and alcohol-based plasticizers.

The plasticizer may be used singly or in combinations of two or more kinds thereof. In particular, an organic ester plasticizer is preferable. Preferred examples of such an organic ester plasticizer include monobasic organic acid ester and polybasic organic acid ester.

Examples of the monobasic organic acid ester include ester of glycol and a monobasic organic acid. Examples of the glycol include a polyalkylene glycol where each alkylene unit has 2 to 4 carbon atoms, preferably 2 or 3 carbon atoms, and the number of such alkylene units repeated is 2 to 10, preferably 2 to 4. The glycol may also be a monoalkylene glycol (namely, the number of repeating unit is 1) having 2 to 4 carbon atoms, preferably 2 or 3 carbon atoms.

Specific examples of the glycol include ethylene glycol, diethylene glycol, triethylene glycol, tetraethylene glycol, propylene glycol, dipropylene glycol, tripropylene glycol, tetrapropylene glycol, and butylene glycol.

Examples of the monobasic organic acid include an organic acid having 3 to 10 carbon atoms, and specifically include butyric acid, isobutyric acid, caproic acid, 2-ethylbutyric acid, heptylic acid, n-octylic acid, 2-ethylhexylic acid, n-nonylic acid and decylic acid.

Specific examples of the monobasic organic acid include triethylene glycol di-2-ethyl butyrate, triethylene glycol di-2-ethyl hexanoate, triethylene glycol dicaprylate, triethylene glycol di-n-octanoate, triethylene glycol di-n-heptanoate, tetraethylene glycol di-n-heptanoate, tetraethylene glycol di-2-ethyl hexanoate, diethylene glycol di-2-ethyl butyrate, diethylene glycol di-2-ethyl hexanoate, dipropylene glycol di-2-ethyl butyrate, triethylene glycol di-2-ethyl pentanoate, tetraethylene glycol di-2-ethyl butyrate, diethylene glycol dicaprylate, triethylene glycol di-n-heptanoate, tetraethylene glycol di-n-heptanoate, triethylene glycol di-2-ethyl butyrate, ethylene glycol di-2-ethyl butyrate, 1,2-propylene glycol di-2-ethyl butyrate, 1,3-propylene glycol di-2-ethyl butyrate, 1,4-butylene glycol di-2-ethyl butyrate, and 1,2-butylene glycol di-2-ethyl butyrate.

Examples of the polybasic organic acid ester include an ester compound of a dibasic organic acid having 4 to 12 carbon atoms, such as adipic acid, sebacic acid or azelaic acid, and an alcohol having 4 to 10 carbon atoms. The alcohol having 4 to 10 carbon atoms may be straight, may have a branched structure, or may have a cyclic structure.

Specific examples include dibutyl sebacate, dioctyl azelate, dihexyl adipate, dioctyl adipate, hexylcyclohexyl adipate, diisononyl adipate, heptylnonyl adipate, dibutylcarbitol adipate, and a mixed adipic acid ester. For example, an oil-modified sebacic acid alkyd may also be adopted. Examples of the mixed adipic acid ester include an adipate produced from two or more alcohols selected from an alkyl alcohol having 4 to 9 carbon atoms and a cyclic alcohol having 4 to 9 carbon atoms.

Examples of the organic phosphorus-based plasticizer include phosphoric acid ester such as tributoxyethyl phosphate, isodecylphenyl phosphate and triisopropyl phosphate.

The organic ester plasticizer is not limited to any complete ester of each of the above esters, and may be a partial ester thereof. For example, the organic ester plasticizer may be a partial ester of glycol and a monobasic organic acid, or a partial ester of a dibasic organic acid and an alcohol. Specific examples include triethylene glycol-mono-2-ethyl hexanoate.

The organic ester plasticizer may also be a partial ester of a tri- or higher-hydric alcohol such as glycerin and a monobasic organic acid. Examples of such a monobasic organic acid include a monobasic organic acid having 3 to 24 carbon atoms, preferably 6 to 18 carbon atoms. Specific examples of the partial ester of a tri- or higher-hydric alcohol and such a monobasic organic acid include a mono- or di-ester of glycerin and stearic acid, and a mono- or di-ester of glycerin and 2-ethylhexylic acid.

In particular, triethylene glycol-di-2-ethyl hexanoate (3GO) is particularly suitably used as the organic ester plasticizer.

Examples of the polyalkylene glycol-based plasticizer include polyethylene glycol, polypropylene glycol, a polyethylene oxide/propylene oxide) block copolymer, a poly(ethylene oxide/propylene oxide) random copolymer, and polytetramethylene glycol, and in particular, polypropylene glycol is preferable.

The polyoxyalkylene ether-based plasticizer is an ether compound of a monohydric or polyhydric alcohol and polyoxyalkylene.

Specific examples of the polyoxyalkylene ether-based plasticizer include polyoxyethylene hexyl ether, polyoxyethylene heptyl ether, polyoxyethylene octyl ether, polyoxyethylene-2-ethylhexyl ether, polyoxyethylene nonyl ether, polyoxyethylene decyl ether, polyoxyethylene allyl ether, polyoxypropylene allyl ether, polyoxyethylene glyceryl ether, polyoxypropylene glyceryl ether, polyoxyethylene diglyceryl ether, polyoxypropylene diglyceryl ether, and polyoxyalkylene pentaerythritol ether.

The polyoxyalkylene ether-based plasticizer is preferably an ether compound of a polyhydric alcohol and polyoxyalkylene, more preferably an ether compound of glycerin or diglycerin and polyoxyalkylene, further preferably an ether compound of glycerin or diglycerin and polyoxypropylene.

Examples of the alcohol-based plasticizer include various polyhydric alcohols such as butanediol, hexanediol, trimethylolpropane, and pentaerythritol. In particular, trimethylolpropane is preferable.

The pressure-sensitive adhesive film may appropriately comprise a known additive to be used in combination with the thermoplastic resin, besides the plasticizer. In other words, the pressure-sensitive adhesive film may be one being composed of the thermoplastic resin, for example, the polyvinyl acetal-based resin, and may comprise the plasticizer, if necessary, compounded, or an additive other than the plasticizer, in addition to the thermoplastic resin.

Specific examples of the additive other than the plasticizer include an ultraviolet absorber, an infrared absorber, an antioxidant, a light stabilizer, an adhesive force modifier, a pigment, a dye, a fluorescent whitener, and a crystal nucleator. The resin composition in the present invention may be diluted with a solvent and then used in the form of a diluted liquid.

The pressure-sensitive adhesive film preferably comprises no low-molecular weight compound, or even if comprising a low-molecular weight compound, preferably comprises a small amount of a low-molecular weight compound. When only a small amount of a low-molecular weight compound is comprised or no low-molecular weight compound is comprised, a low-molecular weight compound can be prevented from being bled out and bleed performance can be improved.

The low-molecular weight compound refers to a compound having a molecular weight of less than 1000, and examples thereof include the above plasticizer, and a reactive diluent to be cured by light irradiation. Examples of the reactive diluent include (meth)acrylic-based reactive diluents such as a (meth)acrylic-based monomer and a (meth)acrylic oligomer, epoxy-based reactive diluents such as an epoxy monomer and an epoxy oligomer, and silicone-based reactive diluents such as an alkoxysilane monomer and an alkoxysilane oligomer. The content of the low-molecular weight compound in the pressure-sensitive adhesive film is, for example, less than 20 parts by mass based on 100 parts by mass of the thermoplastic resin from the viewpoint of bleed performance. The content of the low-molecular weight compound is preferably 15 parts by mass or less, more preferably 10 parts by mass or less, further preferably 5 parts by mass or less, still further preferably 1 part by mass or less from the viewpoint of bleed performance. The above reactive diluent may be crosslinked to form a crosslinked structure, after light curing, and thus the content of the low-molecular weight compound is preferably lower from such a viewpoint. The lower limit of the content of the low-molecular weight compound is 0 parts by mass.

### [Method for producing polyvinyl acetal-based resin]

The polyvinyl acetal-based resin for use in the pressure-sensitive adhesive film of the present invention is obtained by acetalizing a polyvinyl alcohol (also referred to as "raw material polyvinyl alcohol") with an aldehyde, and then, if necessary, reacting the resultant with a modifying agent or subjecting the resultant to a re-acetylation treatment. The raw material polyvinyl alcohol may be an unmodified polyvinyl alcohol, or the raw material polyvinyl alcohol may be a modified polyvinyl alcohol in a case where the modified polyvinyl acetal resin is obtained.

For example, a modified polyvinyl acetal resin (A) having a polyalkylene oxide structure, when produced, is preferably produced by the following production method 1).

### (Production method (1))

In the present production method (1), first, a polyoxyalkylene-modified polyvinyl alcohol is produced as the raw material polyvinyl alcohol. Specifically, the polyoxyalkylene-modified polyvinyl alcohol is obtained by polymerizing a monomer comprising a vinyl ester and a vinyl monomer having a polyoxyalkylene group to obtain a polymer, and then saponifying the polymer. An alkali or an acid is generally used in saponification, and an alkali is preferably used. The polyoxyalkylene-modified polyvinyl alcohol may be used singly or in combinations of two or more kinds thereof.

Next, the polyoxyalkylene-modified polyvinyl alcohol obtained above may be acetalized with an aldehyde to obtain the modified polyvinyl acetal resin (A). The acetalization method here performed may be a known method.

The vinyl ester for use in the production method (1) can be, for example, vinyl acetate, vinyl formate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, or vinyl benzoate. In particular, vinyl acetate is preferable.

Specific examples of the vinyl monomer having a polyoxyalkylene group, for use in the production method (1), include a compound represented by the following formula (4). In particular, a polyoxyalkylene vinyl ether represented by the following formula (4-1) and a polyoxyalkylene allyl ether represented by the following formula (4-2) are preferable. 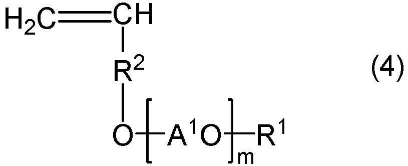 wherein A¹O, R¹, R², and m are the same as described above. 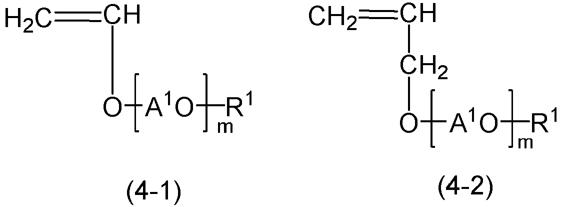 wherein A¹O, m, and R¹ are each the same as described above.

Preferred examples of the vinyl monomer having a polyoxyalkylene group include polyoxyethylene monovinyl ether, polyoxyethylene polyoxypropylene monovinyl ether, polyoxypropylene monovinyl ether, polyoxyethylene monoallyl ether, polyoxyethylene polyoxypropylene monoallyl ether, polyoxypropylene monoallyl ether, polyoxyethylene alkyl vinyl ether, polyoxyethylene polyoxypropylene alkyl vinyl ether, polyoxypropylene alkyl vinyl ether, polyoxyethylene alkyl allyl ether, polyoxyethylene polyoxypropylene alkyl allyl ether, and polyoxypropylene alkyl allyl ether.

The unmodified polyvinyl acetal resin is preferably produced by the following production method (2).

### (Production method (2))

In the present production method (2), the raw material polyvinyl alcohol is acetalized with an aldehyde to obtain a polyvinyl acetal-based resin (hereinafter, also referred to as "raw material polyvinyl acetal-based resin"). The raw material polyvinyl alcohol here used is an unmodified polyvinyl alcohol obtained by saponifying a polyvinyl ester. Next, the raw material polyvinyl acetal-based resin may be subjected to a re-acetylation treatment to obtain the unmodified polyvinyl acetal resin. The re-acetylation treatment may be performed by a conventionally known method, or may be performed with acetic anhydride in the presence of a base such as pyridine. The re-acetylation treatment may be performed by heating to, for example, about 50°C or more and 100°C or less, preferably about 70°C or more and 90°C or less. When the polyvinyl acetal-based resin is subjected to the re-acetylation treatment, the polyvinyl acetal-based resin is decreased in amount of a hydroxyl group, easily results in a decrease in maximum peak temperature of tanδ, and allows for more favorable level-difference conformability.

The modified polyvinyl acetal resin, which has an alkyl group as a modified group in a side chain, may be produced by the following production method.

First, the raw material polyvinyl alcohol is acetalized with an aldehyde to obtain a polyvinyl acetal-based resin (hereinafter, also referred to as "raw material polyvinyl acetal-based resin"). The raw material polyvinyl alcohol here used is obtained by saponifying a polyvinyl ester, and is preferably an unmodified polyvinyl alcohol.

Next, the raw material polyvinyl acetal-based resin is reacted with a modifying agent having an alkyl group to introduce the alkyl group to the raw material polyvinyl acetal-based resin. The modifying agent may be a compound having a reactive group which is to be reacted with a hydroxyl group contained in the raw material polyvinyl acetal-based resin to form a urethane bond or an ester bond. Specific examples include an alkyl isocyanate whose alkyl group has 2 to 30 carbon atoms, such as n-octadecyl isocyanate. Examples also include a carboxylic acid having 3 to 31 carbon atoms, or an anhydride of the carboxylic acid, and carboxylic acid derivatives such as carboxylic acid ester and carboxylic acid halide. Such a carboxylic acid derivative is preferably carboxylic acid chloride such as 2-ethylhexanoyl chloride, lauroyl chloride, myristyl chloride, palmitoyl chloride, or stearoyl chloride.

The pressure-sensitive adhesive film of the present invention widely refers to not only one as a single pressure-sensitive adhesive film, but also one which is laminated or applied on other member and thus is in the form of a layer or film, and one having a relatively large thickness, generally called sheet, is also referred to as "pressure-sensitive adhesive film". The thickness of the pressure-sensitive adhesive film is preferably 100 µm or more and 2000 µm or less, more preferably 100 µm or more and 1500 µm or less from the viewpoint of strength and level-difference conformability of the pressure-sensitive adhesive film. The thickness of the pressure-sensitive adhesive film is further preferably 200 µm or more, still further preferably 300 µm or more from the viewpoint of strength of the pressure-sensitive adhesive film. The thickness of the pressure-sensitive adhesive film is further preferably 500 µm or less from the viewpoint of level-difference conformability.

The pressure-sensitive adhesive film of the present invention may be composed of a single layer. The layer constituting such a single-layer film may have a composition as described with respect to the pressure-sensitive adhesive film. In other words, the layer constituting such a single-layer film may comprise a thermoplastic resin and comprise no plasticizer, or may comprise a plasticizer at any content as described above. An additive may be further appropriately compounded as described above.

The pressure-sensitive adhesive film of the present invention may be a multi-layer film of two or more layers. The multi-layer film may have a composition as described with respect to the pressure-sensitive adhesive film, as the composition of the entire film, and each layer (hereinafter, also referred to as " first layer") may have a composition as described with respect to the pressure-sensitive adhesive film. In other words, each first layer may comprise a thermoplastic resin and comprises no plasticizer or may comprise a plasticizer at any content as described above, as described with respect to the pressure-sensitive adhesive film. Furthermore, an additive may also be appropriately compounded as described above. The details of the thermoplastic resin, the plasticizer, and the additive, and the detail of the content of such each component, in each first layer of the multi-layer film are as described with respect to the pressure-sensitive adhesive film. Herein, the thermoplastic resin serving as the reference of the content is the thermoplastic resin comprised in each first layer. Each first layer in the multi-layer film may be the same in composition or may be different in composition.

The multi-layer film may also be a laminate of the above first layer and a layer other than the first layer (hereinafter, also referred to as "second layer"). Specific examples include a three-layer structure of first layer/second layer/first layer.

In a case where the pressure-sensitive adhesive film of the present invention is a multi-layer film of two or more layers, each layer preferably has a composition described with respect to the pressure-sensitive adhesive film.

### [Method for producing pressure-sensitive adhesive film]

The pressure-sensitive adhesive film of the present invention can be produced by forming a resin composition comprising a thermoplastic resin such as a polyvinyl acetal-based resin, into a film, by a known method. The resin composition comprises at least a thermoplastic resin such as a polyvinyl acetal-based resin, produced as described above, and may be prepared by adding, if necessary, a plasticizer, an additive, and/or the like. The resin composition may be appropriately diluted with a solvent and then used.

More specifically, the pressure-sensitive adhesive film, which is of a single layer, may be formed as a film by applying or casting the resin composition to a support such as a release sheet, and, if necessary, appropriately heating and drying the resultant, or may be formed as a film by subjecting the resin composition to extrusion, press forming, or the like.

In a case where the polyvinyl acetal-based resin is obtained by reacting a raw material polyvinyl acetal-based resin with a modifying agent, as described above, forming may also be made as follows. In other words, a film may also be formed by applying or casting a composition comprising the raw material polyvinyl acetal-based resin, the modifying agent, and, if necessary, other additive such as a plasticizer to be compounded, onto a support such as a release sheet, and thereafter heating the resultant to react the modifying agent with the raw material polyvinyl acetal-based resin.

In a case where the pressure-sensitive adhesive film is a multi-layer film, a resin composition constituting each layer may be provided, and the resin composition constituting each layer may be used to obtain each layer of the multi-layer film. Such a multi-layer structure may be obtained by appropriately stacking such each layer, or may be formed by coextrusion or the like.

The pressure-sensitive adhesive film of the present invention is not particularly limited, can be used in various applications, and is preferably used in various display applications, laminated glass applications, and the like. The display is not particularly limited, and is preferably an in-car display. Examples of the display include a liquid crystal display and an organic EL display, and in particular, a liquid crystal display is preferable.

Laminated glass is used in window glass for various conveyances, for example, vehicles such as automobiles and railways, marine vessels, and airplanes, various buildings and plants such as buildings, condominiums, detached houses, halls, and gymnasiums, or working machines for cutting, or polishing, and construction machines such as shovels, and cranes, and in particular, is preferably used in applications of vehicles such as automobiles. The pressure-sensitive adhesive film of the present invention is favorable in level-difference conformability and bleed performance, and thus is suitable for use in various displays such as in-car displays, and window glass for vehicles.

Herein, laminated glass and a display, to which the pressure-sensitive adhesive film of the present invention is applied, may comprise a laminate described below.

### <Laminate>

The pressure-sensitive adhesive film of the present invention is preferably used together with a base material such as an organic material substrate and/or an inorganic material substrate, and used as one portion of a laminate, but not particularly limited thereto. The laminate of the present invention may specifically comprise the pressure-sensitive adhesive film, and at least any of an inorganic material substrate and an organic material substrate. The pressure-sensitive adhesive film is preferably placed so as to adhere to at least any of an inorganic material substrate and an organic material substrate, and is more preferably placed on a location adhering to an organic material substrate. The pressure-sensitive adhesive film has a high adhesive force to various resin materials, and thus can be placed on a location adhering to an organic material substrate and thus adhere to the base material at a high adhesive force.

A level-difference is preferably provided on a surface of at least one base material to which the pressure-sensitive adhesive film adheres.

In the present invention, even if a level-difference is provided on a base material surface, the pressure-sensitive adhesive film is favorable in level-difference conformability and thus can be prevented from being deteriorated in viewability and attachability.

The detail of a base material having a level-difference is described below, and the height of level-difference is not particularly limited and is, for example, 10 to 500 µm, preferably 10 to 300 µm.

The thickness of the pressure-sensitive adhesive film is preferably adjusted depending on the height of level-difference. Thus, level-difference conformability of the pressure-sensitive adhesive film can be further improved. The thickness of the pressure-sensitive adhesive film is preferably 1.5 times or more, more preferably 2.0 times or more the height of level-difference from the viewpoint of level-difference conformability of the pressure-sensitive adhesive film.

Examples of the organic material substrate include an organic resin plate and a resin film. The organic resin plate is also called organic glass plate. The organic resin plate is not particularly limited, and examples include various organic plates, for example, a polycarbonate plate, a (meth)acrylic plate such as a polymethyl methacrylate plate, an acrylonitrile-styrene copolymer plate, an acrylonitrile-butadiene-styrene copolymer plate, a polyester plate such as a polyethylene terephthalate plate, a fluororesin plate, a polyvinyl chloride plate, a chlorinated polyvinyl chloride plate, a polypropylene plate, a polystyrene plate, a polysulfone plate, an epoxy resin plate, a phenol resin plate, an unsaturated polyester resin plate, and a polyimide resin plate. The organic resin plate may be appropriately surface-treated.

In particular, a polycarbonate plate is preferable because of being excellent in transparency and impact resistance, a (meth)acrylic plate is preferable because of being high in transparency and excellent in weather resistance and mechanical strength, and in particular, a polycarbonate plate is more preferable.

The thickness of the organic resin plate is not particularly limited, and is preferably 0.1 mm or more, further preferably 0.4 mm or more, and preferably 5.0 mm or less, further preferably 3.0 mm or less.

The resin film is not particularly limited, and examples thereof include (meth)acrylic resin films, polyester resins film such as a polycarbonate film, a polyethylene terephthalate (PET) film and a polyethylene naphthalate (PEN) film, polyolefin resin films such as a polyethylene film and a polypropylene film, cyclic polyolefin (COP) films, a triacetylcellulose (TAC) film, a polyethersulfone (PES) resin film, and polyimide resin films. A surface layer being composed of a hard coating layer or the like including a (meth)acrylic resin may also be provided on a surface of the resin film.

The thickness of the resin film is not particularly limited, and is preferably 30 µm or more, further preferably 50 µm or more, and preferably 500 µm or less, further preferably 450 µm or less.

One having a relatively large thickness, having low flexibility, and being not generally foldable is generally called organic resin plate, whereas one having a relatively small thickness and being generally foldable is generally called resin film, and these are not clearly distinguished.

Examples of the inorganic material substrate include an inorganic glass plate. The inorganic glass plate is not particularly limited, and examples thereof include various glass plates such as float plate glass, reinforced glass, colored glass, polished plate glass, figured glass, meshed plate glass, wired plate glass, ultraviolet absorption plate glass, infrared reflection plate glass, infrared absorption plate glass, and green glass. Such inorganic glass may also be, for example, surface-treated. The thickness of the inorganic glass is not particularly limited, and is preferably 0.1 mm or more, further preferably 1.0 mm or more, and preferably 5.0 mm or less, further preferably 3.0 mm or less.

The organic material substrate or the inorganic material substrate may be appropriately provided with an electrode, a sensor, and/or the like. The electrode is constituted by a conductive layer laminated on each of the base materials.

Examples of the sensor include a touch sensor. The touch sensor is a sensor which senses touch input by approach or contact of a finger, a touch pen, or other object to or with each of the base materials, and is constituted by a conductive layer laminated on each of the base materials. The touch sensor senses touch input by an electrical change generated as an electrical change in electrostatic capacity, current, voltage, or the like on the conductive layer due to approach or contact of a finger, a touch pen, or other object to or with each of the base materials.

The conductive layer is not particularly limited, a conventionally known electrode material having transparency can be used without any particular limitation, and examples thereof include an indium tin oxide (ITO) conductive film, a tin oxide conductive film, a zinc oxide conductive film, and a polymeric conductive film.

In particular, the inorganic material substrate is preferably selected from the group consisting of an inorganic glass plate and an inorganic glass plate provided with at least any of an electrode or a sensor. The organic material substrate is preferably at least one selected from the group consisting of a polycarbonate plate, a (meth)acrylic plate, a PET film, a COP film, a polycarbonate film, and such a film provided with at least any of an electrode or a sensor.

The above-mentioned hard coating layer may be formed on a surface of the organic material substrate (in particular, film) where a conductive layer such as an electrode or a sensor is laminated, the surface being opposite to a surface of the base material, on which the conductive layer is provided. The surface of the base material, on which the conductive layer is provided, usually serves as an adhesive surface to the pressure-sensitive adhesive film, and the pressure-sensitive adhesive film of the present invention can also have a high adhesive force to a surface on which the hard coating layer is provided.

The organic material substrate or the inorganic material substrate may also be one to which a printing portion is appropriately applied. The printing portion is formed in order to decorate various base materials or protect a resin for use in fixation of a circumference portion of the base material, from ultraviolet light, and examples thereof include a black printing portion. The black printing portion is also called black ceramic, and is preferably composed of black ceramics. The black ceramic is generally a printing portion formed for ensuring light-blocking ability. The black ceramic can be formed by, for example, printing an ink for black ceramic printing, onto a surface of the base material, and baking the ink for black ceramic printing.

The organic material substrate or the inorganic material substrate may have a level-difference due to application of a conductive layer or a printing portion onto a surface thereof, and has a level-difference typically by application of a printing portion.

The printing portion is preferably applied onto glass such as an inorganic glass plate or an organic glass plate.

The laminate preferably comprises paired base materials selected from the group consisting of the inorganic material substrate and the organic material substrate, and an adhesive film placed between the paired base materials and thus has a multi-layer structure of three or more layers, but not particularly limited thereto.

The adhesive film in such a multi-layer structure may, for example, adhere to both the paired base materials and thus allow the paired base materials to be bonded with the adhesive film being interposed. In this case, the adhesive film may be the above-mentioned pressure-sensitive adhesive film of the present invention.

The laminate may have a structure where still another interlayer member is placed between the paired base materials, and such a structure may have a multi-layer structure of five or more layers where the adhesive film is placed between each of the base materials and such an interlayer member. The adhesive film may adhere to each of the base materials and such an interlayer member, and thus each of the base materials and such an interlayer member may be bonded with the adhesive film being interposed. The adhesive film between each of the base materials and such an interlayer member in the above-described multi-layer structure of five or more layers is a resin film, at least one thereof may be the pressure-sensitive adhesive film of the present invention, and both thereof is preferably each the pressure-sensitive adhesive film of the present invention.

The interlayer member may comprise at least any of the inorganic material substrate and the organic material substrate, and at least any of the inorganic material substrate and the organic material substrate may be placed on a location where the pressure-sensitive adhesive film of the present invention adheres.

The above-described laminate may constitute a display, laminated glass, or the like, but not limited thereto. The interlayer member may be a touch panel, a light control element, or the like, as described below, but not limited thereto. The inorganic material substrate or the organic material substrate may constitute one portion of a display element or the like constituting a touch panel, a light control element, or a display.

The laminate of the present invention can be produced by, for example, providing the adhesive film, and compression bonding each member with the provided adhesive film being interposed. For example, the laminate can be produced by stacking the base material, the adhesive film and the base material in the listed order, and compression bonding them. In a case where the interlayer member is provided, the laminate can be produced by stacking the base material, the adhesive film, the interlayer member, the adhesive film, and the base material in the listed order, and compression bonding them.

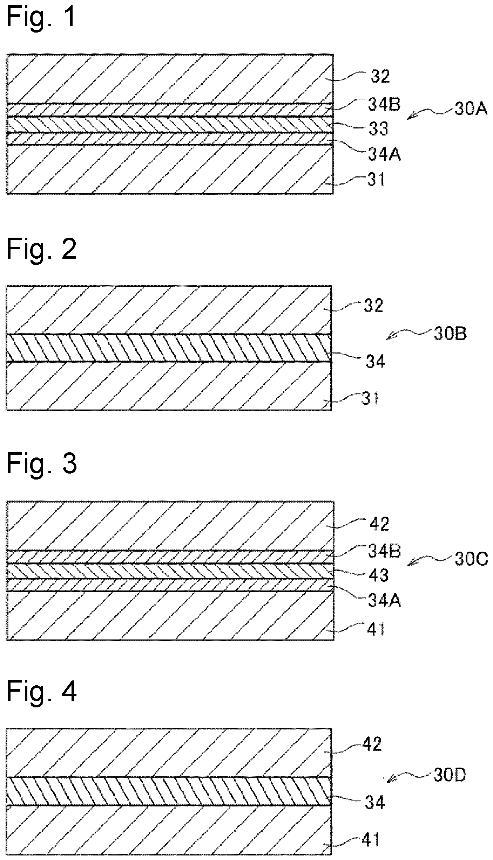

Next, specific examples of the laminate are described with reference to the drawings. Fig. 1 illustrates a laminate according to a first embodiment. In the first embodiment, a laminate 30A is applied to a touch panel-attached display. The touch panel-attached display is preferably an in-car display. The laminate 30A according to the present embodiment comprises a display element 31, a surface protection panel 32, and a touch panel 33 placed between the display element 31 and the surface protection panel 32, and adhesive films 34A and 34B are placed respectively between the touch panel 33 and the display element 31 and between the surface protection panel 32 and the touch panel 33.

The surface protection panel 32 is preferably any of an organic resin plate or an inorganic glass plate, and is preferably an inorganic glass plate.

Examples of the display element 31 include an organic EL display element and a liquid crystal display element. The display element 31 is preferably provided with a polarization plate (polarization film) on the outermost surface at the front surface side thereof. The outermost surface at the front surface side is the outermost surface at the surface protection panel side, and an opposite side thereof is also referred to as rear surface side.

The polarization plate (polarization film) generally has a configuration where a protective film is provided on each of both surfaces of a light polarizer such as a polyvinyl alcohol resin film. The protective film is constituted from the above-mentioned resin film, and is preferably any of a PET film, a COP film, or a TAC film. Accordingly, an organic material substrate is generally placed on the outermost surface of the display element 31, located at the front surface side.

The display element 31, even when provided with no polarization plate (polarization film) on a surface thereof located at the front surface side, may be provided with a protective film on the outermost surface thereof located at the front surface side, and therefore, even in such a case, the most front surface of the display element 31, located at the front surface side, is constituted by an organic material substrate.

The touch panel 33 may be constituted by any of inorganic glass, an organic resin plate or a resin film to which a touch sensor is attached, and inorganic glass or a resin film to which a touch sensor is attached is preferable.

Two or more of the inorganic glass, the organic resin plate or the resin film may be laminated in the touch panel 33 to provide a multi-layer structure body. Also in such a case, a touch sensor may be attached to any of the inorganic glass, the organic resin plate or the resin film in the touch panel 33.

A protective film being composed of a resin film may be placed on any of the most front surface at the front surface side or on the most front surface at the rear surface side in the touch panel 33. Accordingly, each adhesive surface of the touch panel 33, to the adhesive films 34A and 34B, is any of the inorganic glass, the organic glass and the resin film.

The surface protection panel 32 is preferably either an organic resin plate or an inorganic glass plate, and is preferably an inorganic glass plate. A printing portion is preferably provided on a portion of a rear surface of the surface protection panel 32. The printing portion is, for example, black ceramic, and is provided in the form of, for example, a frame on an outer edge portion of the surface protection panel 32, and a portion where the printing portion is provided and a portion where no printing portion is provided provide a level-difference. The rear surface of the surface protection panel 32 serves as an adhesive surface with the adhesive film 34B.

The adhesive films 34A and 34B respectively adhere to the display element 31 and the touch panel 33, and to the touch panel 33 and the surface protection panel 32, thereby bonding them. Any one of the adhesive films 34A and 34B may be the pressure-sensitive adhesive film of the present invention, and both thereof are each preferably the pressure-sensitive adhesive film of the present invention.

The pressure-sensitive adhesive film of the present invention has a high adhesive force to not only an inorganic material substrate, but also various resin materials (namely, organic material substrate). Accordingly, adhesive surfaces of the display element 33, the surface protection panel 32, and the touch panel 33, to the adhesive films 34A and 34B, may be each constituted by the organic material substrate, and even in such a case, the display element 31 and the touch panel 33, and the surface protection panel 32 and the touch panel 33 can be each bonded at a high adhesive force.

The adhesive film 34 is high in level-difference conformability, and thus can prevent deteriorations in viewability and attachability even if adheres to a base material (surface protection panel 32 or the like) having a level-difference. Furthermore, bleed performance is also high and thus contamination or the like of the display element 31 can also be prevented.

Fig. 2 illustrates a laminate according to a second embodiment. The laminate according to the second embodiment is also applied to a display, and a touch panel 33 is omitted in a laminate 30B and thus the laminate 30B comprises a display element 31, a surface protection panel 32, and an adhesive film 34 placed therebetween.

The details of the display element 31 and the surface protection panel 32 are as described in the first embodiment.

In the present embodiment, the adhesive film 34 is composed of the pressure-sensitive adhesive film of the present invention. The adhesive film 34 (pressure-sensitive adhesive film) adheres to the display element 31 and the surface protection panel 32, thereby bonding them, and therefore, the display element 31 and the surface protection panel 32 are bonded at a high adhesive force, as in the first embodiment.

The pressure-sensitive adhesive film of the present invention is high in level-difference conformability, and thus can prevent deteriorations in viewability and attachability, as described above, even if adheres to a base material (surface protection panel 32) having a level-difference. Furthermore, bleed performance is also high and thus contamination or the like of the display element 31 can also be prevented.

In the second embodiment, the surface protection panel 32 may be a OGS (one glass solution) panel, and the surface protection panel 32 may be provided with a sensor such as a touch sensor. Accordingly, the surface protection panel 32 may be constituted by inorganic glass or the like to which a sensor is attached.

Fig. 3 illustrates a laminate according to a third embodiment. A laminate 30C according to the third embodiment is applied to laminated glass having a light control function. The laminate 30C according to the present embodiment comprises paired laminated glass members (base materials) 41 and 42, and a light control element 43 placed between the paired laminated glass members 41 and 42, and adhesive films 34A and 34B are placed respectively between one laminated glass member 41 and the light control element 43, and between other laminated glass member 42 and the light control element 43.

The laminated glass members 41 and 42 may be each any of an inorganic glass plate and an organic resin plate, and the details thereof are as described above.

The laminated glass members 41 and 42 preferably have a level-difference portion due to a printing portion of black ceramic or the like provided on at least any of adhesive surfaces with the adhesive films 34A and 34B, as in the first and second embodiments.

The light control element 43 is preferably a light control film comprising two resin films and a light control layer placed between the two resin films. Accordingly, an adhesive surface of the light control element 43, to each of the adhesive films 34A and 34B, is a resin material.

Examples of such a resin film comprised in the light control element 43 include polyester resin films such as a PET film and a PEN film, (meth)acrylic resin films, TAC films, PES resin films, and polyimide resin films. In particular, a polyester resin film is preferable and in particular a PET film is more preferable, from the viewpoint of handleability or the like.

A conductive layer constituting an electrode is provided on each of surfaces of the two resin films, located at the light control layer side.

The light control layer is changed in visible light transmittance by switching between application and no application of a voltage between such conductive layers provided on the two resin films. The light control layer may be constituted by a liquid crystal layer of a polymer-dispersed liquid crystal (PDLC) or the like. The light control film may be a SPD (Suspended Particle Device) film, an electrochromic film, an electrophoretic film device, or the like. Accordingly, the light control layer may be a SPD layer comprising a resin matrix and a light adjustment suspension dispersed in the resin matrix, or may be an electrochromic material layer. The light control layer may also be an electrophoretic layer or the like comprising an electrophoretic particle and a dispersant for dispersing the electrophoretic particle.

Also in the present embodiment, the adhesive films 34A and 34B adhere respectively to the laminated glass member 41 and the light control element 43, and to the laminated glass member 42 and the light control element 43, thereby bonding them. The adhesive films 34A and 34B are resin films, any one of the films may be the pressure-sensitive adhesive film of the present invention, and both the films are each preferably the pressure-sensitive adhesive film of the present invention.

The pressure-sensitive adhesive film of the present invention has a high adhesive force to not only an inorganic material substrate, but also various resin materials, and thus can allow the laminated glass members 41 and 42 and the polarization element 43 to be bonded at a high adhesive force.

The pressure-sensitive adhesive film of the present invention is high in level-difference conformability, and thus can prevent deteriorations in viewability and attachability even if adheres to the laminated glass members 41 and 42 having a level-difference. Furthermore, bleed performance is also high and thus contamination of the polarization element 43 or the like due to bleed out can also be prevented.

Fig. 4 illustrates a laminate according to a fourth embodiment. A laminate 30D according to the present embodiment is applied to laminated glass. The laminate 30D according to the present embodiment comprises paired laminated glass members 41 and 42, and an adhesive film 34 placed between the paired laminated glass members 41 and 42, and the adhesive film 34 may be composed of the pressure-sensitive adhesive film of the present invention described above.

The paired laminated glass members 41 and 42 are as described in the third embodiment. The adhesive film 34 (pressure-sensitive adhesive film) can adhere to both the laminated glass members 41 and 42, thereby bonding them, and thus the laminated glass members 41 and 42 can be bonded at a high adhesive force.

The paired laminated glass members 41 and 42 are as described in the third embodiment, and it is preferable that at least one of the members be provided with a printing portion and the members have a level-difference portion. The adhesive film 34 (pressure-sensitive adhesive film) adheres to both the laminated glass members 41 and 42 to bond these members, and thus can prevent deteriorations in viewability and attachability even if the laminated glass members 41 and 42 have a level-difference as described above. In addition, bleed performance is also high and thus contamination or the like of surrounding members can also be prevented.

While an example where the adhesive film is a pressure-sensitive adhesive film of a single layer is supposed and described in the above first to fourth embodiments, the adhesive film to be used may be a multi-layer film. The configuration of the multi-layer film is as described above.

### Examples

The present invention is described in more detail with reference to Examples, but the present invention is not limited by these Examples at all. The measurement method and the evaluation method of each value of physical properties in the present invention are as described below.

### <Weight-average molecular weight (Mw)>

A pressure-sensitive adhesive film was dissolved in tetrahydrofuran at a concentration of 0.05% by weight and the solution was filtered with a syringe filter (manufactured by Merck, Millex-LH 0.45 µm), and thereafter the molecular weight was measured with gel permeation chromatography (manufactured by Waters Corporation, e2690). The weight-average molecular weight (Mw) was calculated by use of a molecular weight calibration curve created with a monodisperse polystyrene standard sample. The column used was Shodex GPC KF-806L (manufactured by Showa Denko K.K.), and the eluent used was tetrahydrofuran.

### <Shear storage elastic modulus and maximum peak temperature of tanδ>

Each of the pressure-sensitive adhesive films obtained in Examples and Comparative Examples was cut out to a length of 10 mm and a width of 5 mm, and viscoelasticity was measured with a dynamic viscoelasticity measurement apparatus (manufactured by IT Keisoku Seigyo, Co., Ltd., trade name "DVA-200") in the following measurement conditions, thereby detecting the shear storage elastic modulus (G') at 85°C.

The peak temperature of the loss tangent tanδ obtained from the result of viscoelasticity measurement was read. The peak temperature at the maximum value of tanδ, among peak temperatures in a temperature region of -50 to 150°C, was defined as the maximum peak temperature of tanδ.

### (Measurement conditions)

Deformation manner: shear mode, measurement temperature: -50°C to 200°C, rate of temperature rise: 5°C/min, measurement frequency: 1 Hz, strain: 1%

### <Amount of modification, degree of acetalization, degree of acetylation, and amount of hydroxyl group>

These were determined by dissolution of a polyvinyl acetal-based resin in a chloroform-d, measurement with 1H-NMR (nuclear resonance spectrum), and analysis of the molar ratio of each unit.

### <Gel fraction>

Each of the pressure-sensitive adhesive films of Examples and Comparative Examples was used and the gel fraction was measured according to the method described herein.

### <Level-difference conformability>

White plate glass (S9112 manufactured by Matsunami Glass Ind., Ltd.) having a size of 76 mm × 52 mm × 1.0 to 1.2 mm thickness was provided.

A frame body was produced in which a pressure-sensitive adhesive layer was provided on one surface having an opening of 56 mm × 32 mm and having a size of 76 mm × 52 mm × 75 µm thickness. The frame body was attached to the white plate glass, thereby forming a level-difference on the white plate glass.

Each of the pressure-sensitive adhesive films was cut to a size of 76 mm × 52 mm, and each of the pressure-sensitive adhesive films, cut out, was attached to a surface of the white plate glass on which the level-difference was formed.

Furthermore, a polyethylene terephthalate film (ITO-PET, manufactured by Sekisui Nano Coat Technology Co.,Ltd) coated with ITO was cut to a size of 76 mm × 52 mm, and attached onto each of the pressure-sensitive adhesive films, thereby producing a laminate. Here, an opposite surface of the surface coated with ITO served as an adhesive surface with each of the pressure-sensitive adhesive films.

When the frame body, each of the pressure-sensitive adhesive films, and the polyethylene terephthalate film were each attached, bubbles were avoided from entering as much as possible.

The laminate was compression bonded by use of a vacuum laminator under conditions of 90°C and 1atm for 10 minutes, and then treated by use of an autoclave under conditions of 90°C and 0.5 MPa for 30 minutes, thereafter heating was stopped and the pressure in the autoclave was released after the temperature of the autoclave reached 30°C or less, and the laminate was taken out from the autoclave, thereby producing an evaluation sample.

The interface of the level-difference of the evaluation sample was observed with a digital microscope (manufactured by Keyence Corporation), and evaluated based on the following criteria.

### (Evaluation criteria)

AA: bubbles cannot be confirmed to remain at the interface of the level-difference.
B: bubbles can be confirmed to remain at the interface of the level-difference.

### <Recyclability>

Each of the pressure-sensitive adhesive films was irradiated with 4000 mJ/cm² of light at a wavelength of 365 nm, by use of an ultra-high pressure mercury lamp, on the assumption that each of the pressure-sensitive adhesive films was recovered from each used structure body.

Each of the pressure-sensitive adhesive films irradiated with light was melt-kneaded with a kneader (trade name "Labo Plastomill", manufactured by Toyo Seiki Seisaku-sho, Ltd.) under conditions of 160°C and 50 rpm for 10 minutes. A kneaded product obtained by kneading each of the pressure-sensitive adhesive films was recovered.

The kneaded product obtained was subjected to press forming under conditions of 160°C and 20 MPa, thereby producing a sheet-shaped formed product of 30 cm × 30 cm × 200 µm.

The appearances of five of such sheet-shaped formed products were observed with a digital microscope (manufactured by Keyence Corporation), and the number of optical defects in each of such sheet-shaped formed products was counted and evaluated based on the following criteria.

### (Evaluation criteria)

A: the total number of optical defects in such five sheet-shaped formed products is less than 5.

B: the total number of optical defects in such five sheet-shaped formed products is 5 or more.

### <Bleed performance>

Each of the pressure-sensitive adhesive films was marked with four lines of two lines in the longitudinal direction and two lines in the lateral direction, drawn with a red oily felt pen.

Each of the pressure-sensitive adhesive films marked was placed so that a main surface of each of the pressure-sensitive adhesive films marked was located in a flat surface in parallel with the vertical direction, and each of the pressure-sensitive adhesive films marked was left to still stand under condition a of 10°C for 2 months.

After each of the pressure-sensitive adhesive films marked was left to still stand for 2 months, whether or not blurring and sagging of the marking due to the plasticizer bled out occurred was visually confirmed with respect to each of the pressure-sensitive adhesive films left to still stand for 2 months, and evaluated based on the following criteria.

### (Evaluation criteria)

AA: blurring and sagging are not observed in any of the four lines, and bleed out of the plasticizer does not occur.
A: blurring or sagging is observed in one line of the four lines. However, blurring and sagging are not observed in other three lines thereof.
B: blurring or sagging is observed in two or more lines of the four lines.

### (Example 1)

### [Synthesis of ethylene oxide-modified polyvinyl alcohol]

An allyl ether monomer (1) described in Table 1 was provided. The allyl ether monomer (1) was a compound represented by formula (4-2), A¹O contained an oxyethylene group (EO) and an oxypropylene group (PO) in a mixed manner and had a random structure of these groups, and the molar ratio, the average number of repeating of each of EO and PO, and the terminal group (R¹) were as shown in Table 1.

515 parts by mass of vinyl acetate, 151 parts by mass of the allyl ether monomer (1), and 333 parts by mass of methanol were added into a flask equipped with a stirrer, a thermometer, a dripping funnel and a reflux condenser, the system was purged with nitrogen, and thereafter the temperature was raised to 60°C. 1.3 parts by mass of 2,2-azobisisobutyronitrile was added to the system and polymerization was initiated. The polymerization was stopped after 5 hours from initiation of the polymerization. After the unreacted monomer and methanol were removed by heating in an oven, a 40% by mass copolymer solution in methanol was prepared.

7.4 parts by mass of a 3% by mass NaOH solution in methanol was added with stirring of 100 parts by mass of the resulting copolymer solution in methanol at 40°C, and the resultant was well mixed and then left to still stand. After 2 hours, the solidified polymer was pulverized by a pulverizer, washed with methanol and then dried, thereby obtaining a polymer powder (ethylene oxide-modified polyvinyl alcohol).

### [Preparation of polyvinyl butyral (PVB 1)]

280 g of the polymer powder obtained was added to 2100 g of pure water, and stirred at a temperature of 90°C for about 2 hours and thus dissolved. The solution was cooled to 40°C, 160 parts by mass of hydrochloric acid having a concentration of 35% by mass and 130 parts by mass of n-butylaldehyde were added thereto, the liquid temperature was decreased to 20°C, the temperature was retained to perform acetalization reaction, and a reaction product was precipitated. Thereafter, the liquid temperature was set to 40°C and retained for 3 hours to complete the reaction, and the resultant was neutralized, washed with water and dried by ordinary methods, thereby obtaining a white powder of a polyvinyl acetal-based resin (PVB 1).

### [Production of pressure-sensitive adhesive film]

The polyvinyl acetal-based resin (PVB 1) obtained was subjected to press forming at a temperature of 160°C and a pressure of 20 MPa, thereby obtaining a pressure-sensitive adhesive film having a thickness of 200 µm. The maximum peak temperature of tanδ, the shear storage elastic modulus (G'), and the gel fraction of each of the pressure-sensitive adhesive films obtained were measured, and level-difference conformability, recyclability, and bleed performance thereof were evaluated.

### (Examples 2 to 4)

The same manner as in Example 1 was performed except that the thickness of each pressure-sensitive adhesive film was as shown in Table 1.

### (Example 5)

PVB 2 was obtained in the same manner as in Example 1 except that the allyl ether monomer used was changed to an allyl ether monomer (2), the amounts of vinyl acetate, the allyl ether monomer (2), methanol, and 2,2-azobisisobutyronitrile were respectively changed to 723 parts by mass, 257 parts by mass, 20 parts by mass, and 1 part by mass, and the polymerization temperature was changed to 62°C. PVB 2 was used to produce a pressure-sensitive adhesive film in the same manner as in Example 1 except that the thickness of the pressure-sensitive adhesive film was as shown in Table 1. Physical properties of the pressure-sensitive adhesive film obtained were measured or evaluated in the same manner as in Example 1.

The allyl ether monomer (2) was a compound represented by formula (4-2), A¹O represented an oxypropylene group (PO), and the average number of repeating and the terminal group (R¹) were as shown in Table 1.

### (Example 6)

PVB 3 was obtained in the same manner as in Example 1 except that the amounts of vinyl acetate, the allyl ether monomer (1), methanol, and 2,2-azobisisobutyronitrile were respectively changed to 552 parts by mass, 162 parts by mass, 286 parts by mass, and 1.4 parts by mass, and PVB 3 was used to produce a pressure-sensitive adhesive film in the same manner as in Example 1 except that the thickness of the pressure-sensitive adhesive film was as shown in Table 1. Physical properties of the pressure-sensitive adhesive film obtained were measured or evaluated in the same manner as in Example 1.

### (Example 7)

PVB 4 was obtained in the same manner as in Example 1 except that the amounts of vinyl acetate, the allyl ether monomer (1), methanol, and 2,2-azobisisobutyronitrile were respectively changed to 572 parts by mass, 143 parts by mass, 286 parts by mass, and 0.7 parts by mass, and PVB 4 was used to produce a pressure-sensitive adhesive film in the same manner as in Example 1 except that the thickness of the pressure-sensitive adhesive film was as shown in Table 1. The pressure-sensitive adhesive film obtained was evaluated in the same manner as in Example 1.

### (Example 8)

PVB 5 was obtained in the same manner as in Example 1 except that the allyl ether monomer used was changed to an allyl ether monomer (3) and the amounts of vinyl acetate, the allyl ether monomer (3), methanol, and 2,2-azobisisobutyronitrile were respectively changed to 751 parts by mass, 230 parts by mass, 20 parts by mass, and 1 part by mass. PVB 5 was used to produce a pressure-sensitive adhesive film in the same manner as in Example 1. PVB 5 was used to produce a pressure-sensitive adhesive film in the same manner as in Example 1 except that the thickness of the pressure-sensitive adhesive film was adjusted as shown in Table 1. The pressure-sensitive adhesive film obtained was evaluated in the same manner as in Example 1.

The allyl ether monomer (3) was a compound represented by formula (4-2), A¹O contained an oxyethylene group (PO) and an oxypropylene group (PO) in a mixed manner, and the average number of repeating of each of these groups and the terminal group (R¹) were as shown in Table 1.

### (Example 9)

PVB 6 was obtained in the same manner as in Example 1 except that the allyl ether monomer used was changed to an allyl ether monomer (4), the amounts of vinyl acetate, the allyl ether monomer (4), methanol, and 2,2-azobisisobutyronitrile were respectively changed to 834 parts by mass, 147 parts by mass, 20 parts by mass, and 0.5 parts by mass, and the polymerization temperature was changed to 52°C. A resin composition was obtained by mixing 15 parts by mass of a plasticizer (3GO) with 100 parts by mass of PVB 6, and the resin composition obtained was used and subjected to press forming by the same method as in Example 1 except that the thickness of the pressure-sensitive adhesive film was adjusted as shown in Table 1, thereby obtaining a pressure-sensitive adhesive film. The pressure-sensitive adhesive film obtained was evaluated in the same manner as in Example 1.

The allyl ether monomer (4) was a compound represented by formula (4-2), A¹O represented an oxyethylene group (EO), and the average number of repeating and the terminal group (R¹) were as shown in Table 1.

### (Comparative Example 1)

A resin composition was obtained by using PVB 7 being unmodified polyvinyl butyral, as the polyvinyl acetal-based resin used, and mixing 40 parts by mass of a plasticizer (3GO) with 100 parts by mass of PVB 7, and the resin composition obtained was used and subjected to press forming by the same method as in Example 1, thereby obtaining a pressure-sensitive adhesive film. The pressure-sensitive adhesive film obtained was evaluated in the same manner as in Example 1.

### (Comparative Example 2)

A resin composition was obtained by using PVB 8 being unmodified polyvinyl butyral, as the polyvinyl acetal-based resin used, and mixing 25 parts by mass of a plasticizer (3GO) with 100 parts by mass of PVB 8, and the resin composition obtained was used and subjected to press forming by the same method as in Example 1, thereby obtaining a pressure-sensitive adhesive film. The pressure-sensitive adhesive film obtained was evaluated in the same manner as in Example 1.

### (Comparative Example 3)

A pressure-sensitive adhesive film was obtained by using PVB 9 being unmodified polyvinyl butyral, as the polyvinyl acetal-based resin used, and mixing no plasticizer and performing press forming by the same method as in Example 1. The pressure-sensitive adhesive film obtained was evaluated in the same manner as in Example 1.

### (Comparative Example 4)

PVB 7 being unmodified polyvinyl butyral was used as the polyvinyl acetal-based resin used. A resin composition was obtained by mixing 30 parts by mass of a plasticizer (3GO), 10 parts by mass of a reactive diluent (trimethylolpropane triacrylate: TMPA), and 0.1 parts by mass of benzophenone (BP) as a photopolymerization initiator, with 100 parts by mass of PVB 7, and the resin composition obtained was used and subjected to press forming by the same method as in Example 1, thereby obtaining a pressure-sensitive adhesive film. The pressure-sensitive adhesive film obtained was evaluated with respect to bleed performance. The pressure-sensitive adhesive film was irradiated with 4000 mJ/cm² of light at a wavelength of 365 nm, by use of an ultra-high pressure mercury lamp, and the gel fraction, the shear storage elastic modulus (G'), the maximum peak temperature of tanδ were measured after the light irradiation. In addition, recyclability was evaluated.

In the case of level-difference conformability, the pressure-sensitive adhesive film produced in Comparative Example 4 was used to produce a laminate as described with respect to the above evaluation method, and the laminate was irradiated with 4000 mJ/cm² of light at a wavelength of 365 nm, by use of an ultra-high pressure mercury lamp. Thereafter, level-difference conformability was evaluated.

### (Comparative Example 5)

PVB 8 being unmodified polyvinyl butyral was used as polyvinyl butyral used as a raw material, instead of PVB 1. A resin composition was obtained by mixing 10 parts by mass of a plasticizer (3GO), 20 parts by mass of a reactive diluent (TMPA), and 0.2 parts by mass of benzophenone as a photopolymerization initiator, with 100 parts by mass of PVB 8, and the resin composition obtained was used and subjected to press forming by the same method as in Example 1, thereby obtaining a pressure-sensitive adhesive film. The pressure-sensitive adhesive film obtained was evaluated with respect to bleed performance. The pressure-sensitive adhesive film was irradiated with 4000 mJ/cm² of light at a wavelength of 365 nm, by use of an ultra-high pressure mercury lamp, and the gel fraction, the shear storage elastic modulus (G'), and the maximum peak temperature of tanδ were measured after the light irradiation.

In the case of level-difference conformability, the pressure-sensitive adhesive film produced in Comparative Example 5 was used to produce a laminate as described with respect to the above evaluation method, and the laminate was irradiated with 4000 mJ/cm² of light at a wavelength of 365 nm, by use of an ultra-high pressure mercury lamp. Thereafter, level-difference conformability was evaluated.

### (Comparative Example 6)

A resin composition was obtained by diluting 100 parts by mass of a (meth)acrylic polymer (Ac1) obtained by polymerizing a monomer at a monomer ratio shown in Table 3, with ethyl acetate, so that the solid content was 45% by mass, and adding 1 part by mass of an isocyanate-based crosslinking agent ("Coronate L-45" manufactured by Nippon Polyurethane Industry Co., Ltd., solid content 45% by mass) on solid content basis. The resin composition obtained was applied to a release treatment surface of a release PET film so that the thickness after drying was 150 µm, and the resultant was dried at 80°C for 15 minutes, thereby obtaining a pressure-sensitive adhesive film. The pressure-sensitive adhesive film obtained was aged at 23°C for 5 days, and then evaluated in the same manner as in Example 1.

### (Comparative Example 7)

The same manner as in Comparative Example 6 was performed except that the (meth)acrylic polymer (Ac1) was changed to a (meth)acrylic polymer (Ac2).

Table 1 below shows allyl ether monomers (1) to (4) used as raw materials in Examples.

**Table 1**

| Allyl ether monomer | | (1) | (2) | (3) | (4) |
|---|---|---|---|---|---|
| Molecular weight | | 2500 | 1500 | 2000 | 1500 |
| Structure | Type of A¹O | EO | - | EO | EO |
| | | PO | PO | PO | - |
| | PO/EO(mol) | 50/50 | 100/0 | 50/50 | 0/100 |
| | Terminal(R¹) | Butyl | Hydrogen atom | Hydrogen atom | Hydrogen atom |
| Average number of repeating units | EO | 23.4 | - | 19.0 | 328 |
| | PO | 23.4 | 24.9 | 19.0 | - |

Table 2 below shows PVB 1 to PVB 9 used in Examples and Comparative Examples.

**Table 2**

| | | | PVB1 | PVB2 | PVB3 | PVB4 | PVB5 | PVB6 | PVB7 | PVB8 | PVB9 |
|---|---|---|---|---|---|---|---|---|---|---|---|
| Polyvinyl acetal-based resin | Acetyl | Content rate (% by mol) | 1.8 | 0.9 | 2.1 | 1.8 | 1.2 | 3.1 | 1 | 1 | 0.7 |
| | Hydroxyl group | Content rate (mol%) | 20.4 | 27.1 | 12.4 | 21.8 | 18.8 | 14.5 | 32 | 31 | 34.3 |
| | Acetal | Content rate (mol%) | 74.8 | 70.1 | 84 | 73.7 | 74.7 | 80.5 | 67 | 68 | 64.8 |
| | | Type | Butyral | Butyral | Butyral | Butyral | Butyral | Butyral | Butyral | Butyral | Butyral |
| | Alkylene oxide structure | Content rate (mol%) | 3 | 1.9 | 1.5 | 2.7 | 5.3 | 1.9 | - | - | - |
| | | Type | EO/PO | PO | EO/PO | EO/PO | EO/PO | EO | - | - | - |
| | | Terminal (R¹) | Butyl | Hydrogen atom | Butyl | Butyl | Hydrogen atom | Hydrogen atom | - | - | - |
| | | Average number of repeating units (EO) | 23 | - | 23 | 23 | 19 | 33 | - | - | - |
| | | Average number of repeating units (PO) | 23 | 25 | 23 | 23 | 19 | - | - | - | - |

Table 3 below shows (meth)acrylic polymers used in Comparative Examples.

**Table 3**

| | | | Ac1 | Ac2 |
|---|---|---|---|---|
| (Meth)acrylic polymer | Monomer (% by mass) | n-Butyl acrylate | 65 | 25 |
| | | Methyl methacrylate | 26 | - |
| | | Ethyl acrylate | 4 | - |
| | | Hydroxyethyl acrylate | 1 | - |
| | | 2-Ethylhexyl acrylate | - | 32 |
| | | Isobutyl acrylate | - | 27 |
| | | 4-Hydroxybutyl acrylatev | - | 15 |
| | | Acrylic acid | 4 | 1 |

Table 4 shows conditions for carrying out each of Examples and Comparative Examples, physical properties and evaluation results.

**Table 4**

| | | Example 1 | Exam ple 2 | Example 3 | Example 4 | Example 5 | Example 6 | Example 7 | Example 8 | Example 9 | Com parative Example 1 | Comparative Example 2 | Com parative Example 3 | Comparative Example 4 | Comparative Example 5 | Comparative Example 6 | Comparative Example 7 |
|---|---|---|---|---|---|---|---|---|---|---|---|---|---|---|---|---|---|
| Resin | Type | PVB1 | PVB1 | PVB1 | PVB1 | PVB2 | PVB3 | PVB4 | PVB5 | PVB6 | PVB7 | PVB8 | PVB9 | PVB7 | PVB8 | Ac1 | Ac2 |
| | Molecular weiaht Mw (×10^4) | 23 | 23 | 23 | 23 | 17 | 35 | 30 | 22 | 26 | 36 | 19 | 64 | 36 | 19 | 65 | 70 |
| Plasticizer | 3GO (parts by mass*1) | - | - | - | - | - | - | - | - | 15 | 40 | 25 | - | 30 | 10 | - | - |
| Reactive diluent | TMPA (parts by mass*1) | - | - | - | - | - | - | - | - | - | - | - | - | 10 | 20 | - | - |
| Photopolymerization initiator | BP (parts by mass*2) | - | - | - | - | - | - | - | - | - | - | - | - | 1 | 1 | - | - |
| Crosslinking agent | Coronate L-45 (parts bv mass*1) | - | - | - | - | - | - | - | - | - | - | - | - | - | - | 1 | 1 |
| Thickness | µm | 200 | 380 | 800 | 1500 | 380 | 880 | 780 | 780 | 780 | 200 | 200 | 200 | 200 | 200 | 150 | 150 |
| Local maximum peak temperature of tanδ | Temperature (°C) | 33.2 | 33.2 | 33.2 | 33.2 | 38.2 | 30.1 | 41.2 | 24.1 | 25.2 | 26 | 31 | 79 | 35 | 40 | 5 | -3 |
| | | | | | | | | | | | | | | Before light irradiation | Before light irradiation | | |
| G'@85°C | (10⁶Pa) | 0.16 | 0.16 | 0.16 | 0.16 | 0.16 | 0.16 | 0.16 | 0.1 | 0.12 | 0.24 | 0.096 | 0.21 | 0.21 | 0.12 | 0.054 | 0.005 |
| | | | | | | | | | | | | | | Before light irradiation | Before light irradiation | | |
| Gel fraction | % | 0 | 0 | 0 | 0 | 0 | 0 | 0 | 0 | 0 | 0 | 0 | 0 | 16 | 20 | 90 | 70 |
| Level-difference conformability | | AA | AA | AA | AA | AA | AA | AA | AA | AA | AA | AA | B | AA | AA | B | B |
| Recyclability | | A | A | A | A | A | A | A | A | A | A | A | A | B | B | B | B |
| Bleed performance | | AA | AA | AA | AA | AA | AA | AA | AA | AA | B | B | AA | B | B | AA | AA |
| | | | | | | | | | | | | | | Before light irradiation | Before light irradiation | | |

| | | | | | | | | | | | | | | | | | |
|---|---|---|---|---|---|---|---|---|---|---|---|---|---|---|---|---|---|
| *1 represents "parts by mass" based on 100 parts by mass of thermoplastic resin. *2 represents "parts by mass" based on 100 parts by mass of reactive diluent. | | | | | | | | | | | | | | | | | |

The pressure-sensitive adhesive film of each of Examples above was one in which the shear storage elastic modulus at 85°C was 0.06 × 10⁶ Pa or more and 1.00 × 10⁶ Pa or less, the pressure-sensitive adhesive film comprised no plasticizer or a plasticizer at a content of less than 20 parts by mass based on 100 parts by mass of the thermoplastic resin, and the gel fraction was 15% or less, and therefore the pressure-sensitive adhesive film was favorable in all of level-difference conformability, recyclability and bleed performance.

On the contrary, that of each of Comparative Examples 1 to 3 was inferior in bleed performance because the content of the plasticizer was more than 20 parts by mass based on 100 parts by mass of the thermoplastic resin. That of each of Comparative Examples 3 to 6 was inferior in recyclability because the gel fraction was more than 15%. Furthermore, that of each of Comparative Examples 5 and 6 was so low in shear storage elastic modulus at 85°C that level-difference conformability was also deteriorated.

### Reference Signs List

30A, 30B, 30C, 30D laminate
31 display element
32 surface protection panel
34, 34A, 34B adhesive film (pressure-sensitive adhesive film)
32 second layer
41, 42 laminated glass member
43 polarization element

## Claims

1. A pressure-sensitive adhesive film comprising a thermoplastic resin,
a shear storage elastic modulus at 85°C being 0.06 × 10⁶ Pa or more and 1.00 × 10⁶ Pa or less,
the pressure-sensitive adhesive film comprising no plasticizer, or comprising less than 20 parts by mass of a plasticizer based on 100 parts by mass of the thermoplastic resin, and
a gel fraction being 15% or less.

2. The pressure-sensitive adhesive film according to claim 1, wherein a weight-average molecular weight (Mw) of the thermoplastic resin is 600,000 or less.

3. The pressure-sensitive adhesive film according to claim 1 or 2, a thickness is 100 µm or more and 2000 µm or less.

4. The pressure-sensitive adhesive film according to any one of claims 1 to 3, wherein a maximum peak temperature of tanδ is 10°C or more and 52°C or less.

5. The pressure-sensitive adhesive film according to any one of claims 1 to 4, wherein the thermoplastic resin is a polyvinyl acetal-based resin.

6. The pressure-sensitive adhesive film according to claim 5, wherein the polyvinyl acetal-based resin has a polyalkylene oxide structure represented by the following formula (1): 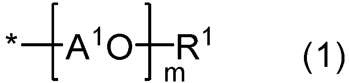 wherein A¹O represents an oxyalkylene group having 2 to 6 carbon atoms, and m represents an average number of repeating and is 4 to 200; R¹ represents an alkyl group having 1 to 8 carbon atoms, or a hydrogen atom, in which the oxyalkylene group is optionally adopted singly or as a mixture of two or more kinds thereof; and * represents a position of binding with other group.

7. The pressure-sensitive adhesive film according to claim 6, wherein an oxyalkylene group in the polyalkylene oxide structure comprises at least any of an oxyethylene group and an oxypropylene group.

8. The pressure-sensitive adhesive film according to claim 6 or 7, wherein an oxyalkylene group in the polyalkylene oxide structure contains both an oxyethylene group and an oxypropylene group.

9. The pressure-sensitive adhesive film according to any one of claims 6 to 8, wherein a degree of acetalization is 60% by mol or more.

10. The pressure-sensitive adhesive film according to any one of claims 1 to 9, to be used for bonding paired base materials.

11. The pressure-sensitive adhesive film according to claim 10, to be used for bonding a first organic material substrate, and a second organic material substrate or inorganic material substrate, wherein the first organic material substrate and the second organic material substrate are at least one organic material substrate selected from the group consisting of a polarization film, a polyethylene terephthalate film, a polycarbonate plate, and a (meth)acrylic plate.

12. A laminate comprising the pressure-sensitive adhesive film according to any one of claims 1 to 11, and paired base materials, wherein the pressure-sensitive adhesive film is placed between the paired base materials.

13. A liquid crystal display comprising the laminate according to claim 12.

14. A laminated glass comprising the laminate according to claim 12.
